# EUROPÄISCHE PATENTSCHRIFT

(11) **EP 0 837 993 B1**
(45) Veröffentlichungstag und Bekanntmachung des Hinweises auf die Patenterteilung: **26.09.2001**
(21) Anmeldenummer: 96924856.6
(22) Anmeldetag: 03.07.1996
(51) Int. Cl.: F16B 31/02, G01L 5/24

(54) **MESSEINRICHTUNG FÜR DIE DEHNUNG EINES GEWINDEBOLZENS ODER EINER SCHRAUBE**
DEVICE FOR MEASURING THE EXTENSION OF A THREADED BOLT OR SCREW
DISPOSITIF DE MESURE DE L'ALLONGEMENT D'UN BOULON FILETE OU D'UNE VIS

(30) Priorität: 08.07.1995 DE 19524959
(43) Veröffentlichungstag der Anmeldung: 29.04.1998
(73) Patentinhaber: Hohmann, Jörg, 59581 Warstein (DE); Hohmann, Frank, 59581 Warstein (DE)
(72) Erfinder: Hohmann, Jörg, 59581 Warstein (DE); Hohmann, Frank, 59581 Warstein (DE)
(74) Vertreter: Rehders, Jochen, Dipl.-Ing.
(86) Internationale Anmeldenummer: EP9602901
(87) Internationale Veröffentlichungsnummer: WO9703296

(56) Entgegenhaltungen:
- EP-A- 0 393 852
- WO-A-93/22568
- FR-A- 2 422 227
- US-A- 4 377 361
- US-A- 4 981 404

## Beschreibung

Die Erfindung betrifft eine Meßeinrichtung für die Dehnung eines mittels einer Mutter gespannten Gewindebolzens oder einer Schraube.

Um im Maschinenbau eingesetzten Befestigungsschrauben eine bestimmte Vorspannung zu erteilen, werden sie bzw. die Muttern überwiegend mittels Drehmomentschlüssel angezogen.

Diese können manuell betätigt sein oder einen elektrischen oder hydraulischen Antrieb besitzen. Nachteilig ist bei diesen als Drehmomentschlüssel ausgebildeten Spannvorrichtungen, daß sich keine eindeutige Beziehung zwischen dem aufgewandten Drehmoment und der tatsächlich erreichten Bolzen- bzw. Schraubenspannung herstellen läßt. Dies liegt an den veränderlichen Reibwerten im Gewinde und zwischen den Auflageflächen des Schraubenkopfes bzw. der die Schraube bzw. den Gewindebolzen spannenden Mutter.

Für die genaue Kenntnis der Schraubenvorspannung ist es daher erforderlich, die erreichte Schraubendehnung, die direkt proportional zur aufgebrachten Vorspannung ist, zu messen. Um eine genaue Messung der tatsächlichen Schraubendehnung durchführen zu können, müssen beide Schraubenenden für die Messung zugänglich sein. Wenn nur ein Schraubenende für die Messung zugänglich ist, läßt sich die Dehnung nur gegenüber der Auflagefläche für die Mutter messen, was mit Ungenauigkeiten aufgrund von Setzerscheinungen im Bereich der Auflagefläche und aufgrund der Kompression der mittels der Schraube zu verspannenden Flansche verbunden ist. Die Dehnungsmessung läßt sich nur durchführen, wenn das Schraubenende für ein Meßgerät, z. B. eine Meßuhr zugänglich ist, und die Schraubenspannvorrichtung muß in der Regel entfernt werden, bevor sich eine Dehnungsmessung durchführen läßt.

In der deutschen Gebrauchsmusterschrift G 94 08 009.7 ist ein Ratschenschlüssel für Winkelanzug mit optischer und akustischer Anzeige beschrieben, bei dem zum Aufbringen der gewünschten Vorspannung auf die Schäfte von in Werkstücke eingebrachten Schrauben, insbesondere Dehnschrauben, wird die Schraube, insbesondere von einem Schraubenverband, zunächst nur mit einem geringen Drehmoment angezogen mit einem an sich bekannten Drehmomentschlüssel und anschließend die im plastischen Bereich liegende Dehnung der Schrauben dadurch erzielt, daß die Schrauben um einen bestimmten Drehwinkel weiter angezogen werden. Das Schraubwerkzeug weist hierzu eine Scheibe mit einer gleichachsig zur Drehachse einer Anfassung angeordneten Winkelskala und eine mit der Winkelskala zusammenwirkende Anzeigenmarkierung auf. Die die Winkelskala aufweisende Scheibe und die Anzeigenmarkierung sind gleichachsig zur Drehachse der Anfassung gegeneinander verdrehbar und einerseits drehschlüssig mit dem Schraubwerkzeug verbunden und andererseits gegen Mitdrehen gesichert am Werkstück gehaltert. Dieses Festlegen erfolgt mit einer biegsamen und in der jeweils eingestellten Gestalt verbleibenden, von einer Drahtspirale gebildeten und mit einem an ihrem freien Ende einen Kopf mit einem am Werkstück angreifenden Magnet aufweisenden Stange. Zwischen der Anfassung und dem zum Drehen der Anfassung dienenden Hebelarm ist eine zum mehrhubigen Drehen der Anfassung bis zum vollständigen Erreichen des gewünschten Drehwinkels dienende Ratsche vorgesehen.

Der Erfindung liegt das Problem zugrunde, eine Meßeinrichtung für die Dehnung eines Gewindebolzens oder einer Schraube zu schaffen, die sich schnell und einfach handhaben läßt und insbesondere während des Anziehend der Mutter oder der Schraube ein Ablesen der Dehnung gestattet. Dabei soll die Messung so genau sein, wie dies mit einer Meßuhr möglich ist und die Genauigkeit, die sich beim Anziehen mittels eines Drehmomentschlüssels erreichen läßt, erheblich übertreffen.

Ausgehend von dieser Problemstellung wird eine Meßeinrichtung für die Dehnung eines mittels einer Mutter gespannten Gewindebolzens oder einer Schraube vorgeschlagen, die erfindungsgemäß eine Dehnungsmeßskala am Umfang der Mutter oder am Schraubenkopf und eine feststehende Referenzmarkierung aufweist.

Wird bei dieser Anordnung die Mutter zum Spannen des Gewindebolzens oder die Schraube gedreht, läßt sich jederzeit und direkt die Dehnung des Gewindebolzens oder der Schraube anhand der Dehnungsmeßskala mit Bezug auf die Referenzmarkierung ablesen. Die abgelesenen Dehnungswerte sind von den Reibungsverhältnissen im Gewinde zwischen der Mutter und dem Gewindebolzen bzw. an der Schraube sowie gegenüber der Auflagefläche vollkommen unabhängig und geben die tatsächliche Dehnung des Gewindebolzens bzw. der Schraube genügend genau an, wenn die Mutter zunächst so weit angezogen wird, daß sich etwaig vorhandene Unterlegscheiben und die zu verbindenden Flansche ausreichend gesetzt haben und ein Spiel zwischen den einzelnen zu verspannenden Elementen nicht mehr vorhanden ist. Wird die Mutter nun weitergedreht, ergibt die Ablesung an der Dehnungsmeßskala mit Bezug auf die feststehende Referenzmarkierung die tatsächliche Dehnung des Gewindebolzens bzw. der Schraube und dies fortlaufend, ohne daß die Spannvorrichtung entfernt werden müßte.

Selbstverständlich kann die Dehnungsmeßskala in Umkehrung zur zuerst erwähnten Möglichkeit auch am Umfang einer feststehenden Unterlegscheibe und die Referenzmarkierung an der Mutter oder an dem Schraubenkopf angeordnet sein, ohne daß dies an den erreichbaren Wirkungen un Vorteilen etwas ändert.

Bei hochbelasteten Gewindebolzen oder Schrauben, die erhöhten Sicherheitsanforderungen genügen müssen, ist es vorteilhaft, wenn die auf den Gewindebolzen bzw. die Schraube geschraubte Mutter zum Spannen des Gewindebolzens oder der Schraube oder die Schraube selber nicht gedreht wird, um keine Torsionskräfte über die Reibung im Gewinde zwischen der Mutter und dem Gewindebolzen bzw. der Schraube auf den Gewindebolzen bzw. die Schraube und keine Biegekräfte aufgrund einer exzentrischen Verlagerung des Gewindebolzens bzw. der Schraube in der Bohrung zu übertragen.

Gemäß einer weiteren Ausbildung der Erfindung können daher die Dehnungsmeßskala an einer mit Bezug auf die feststehende Mutter oder den feststehenden Schraubenkopf zur Dehnung des Gewindebolzens oder der Schraube schraubbaren, sich an einer Auflagefläche abstützenden Außenmutter angeordnet und die Referenzmarkierung bezüglich der Auflagefläche feststehend ausgebildet sein.

Des weiteren können die Dehnungsmeßskala am Umfang einer Unterlegscheibe, die mit Bezug auf die Mutter oder den Schraubenkopf feststeht, und die Referenzmarkierung an einer mit Bezug auf die feststehende Mutter oder den feststehenden Schraubenkopf zur Dehnung des Gewindebolzens oder der Schraube schraubbaren Außenmutter angeordnet sein.

Für die direkte Ablesung der Bedienung ist es vorteilhaft, wenn die Dehnungsmeßskala eine Einteilung in Millimetern oder Bruchteilen davon aufweist und die Referenzmarkierung als Nonius ausgebildet ist.

Gemäß einer weiteren Ausbildung der Erfindung kann die auf das Gewindeende eines Gewindebolzens aufschraubbare Mutter ein Außengewinde für die gegen die Auflagefläche schraubbare Außenmutter aufweisen, so daß das Spannelement die Dehnungsmeßskala oder die Referenzmarkierung und ein gegenüber diesem Spannelement feststehendes Bauelement die Referenzmarkierung oder die Dehnungsmeßskala trägt, wobei das Innengewinde und das Außengewinde der Mutter gleiche oder unterschiedliche Steigungen aufweisen können.

Bevorzugt stützt sich das Spannelement an einer gegenüber der Auflagefläche undrehbar festlegbaren Unterlegscheibe ab, wobei sich das Spannelement mit einer balligen Ringfläche an einer komplementär ausgebildeten Fläche der Unterlegscheibe abstützen kann, um auf diese Weise Unebenheiten der Auflagefläche auszugleichen.

Die Verdrehsicherung für die Unterlegscheibe kann die Form einer gegen die Auflagefläche spannbaren Schraube oder einer gegen die Auflagefläche gerichteten Rändelung oder Plankerbverzahnung aufweisen.

Wenn zwischen der Unterlegscheibe und ihrer Auflagerfläche eine Verdrehsicherung vorhanden ist, läßt sich die Unterlegscheibe dazu benutzen, eine Verdrehsicherung der Mutter bezüglich des Gewindebolzens bzw. der Schraube zu schaffen. Diese Verdrehsicherung läßt vorteilhafterweise eine relative Axialverschiebung zu und kann insbesondere aus einem Außensechskant am zur Unterlegscheibe benachbarten Ende der Mutter und einem diesen Außensechskant mit Spiel umgreifenden Innensechskant an der Unterlegscheibe bestehen.

Bei der erfindungsgemäßen Ausgestaltung mit einer Mutter, einem diese Mutter umgreifenden Spannelement, das sich über eine Unterlegscheibe auf einer Auflagerfläche abstützt, kann die Dehnungsmeßskala vorteilhafterweise auf einem zylindrischen Außenumfang der Unterlegscheibe und die Referenzmarkierung auf einem hierzu benachbarten zylindrischen Bereich des Spannelements angeordnet sein, wodurch sich eine problemlose Ablesemöglichkeit der Dehnung auch mit am Spannelement angesetzter Spannvorrichtung ergibt.

Bei dieser Ausführungsform kann sich die Spannvorrichtung an einem Außensechskant an der Mutter abstützen, wenn das Spannelement mittels dieser, an einem Außensechskant des Spannelements angreifenden Spannvorrichtung gedreht wird.

Die Erfindung wird nachstehend anhand eines in der Zeichnung dargestellten Ausführungsbeispiels des näheren erläutert. In der Zeichnung zeigen:

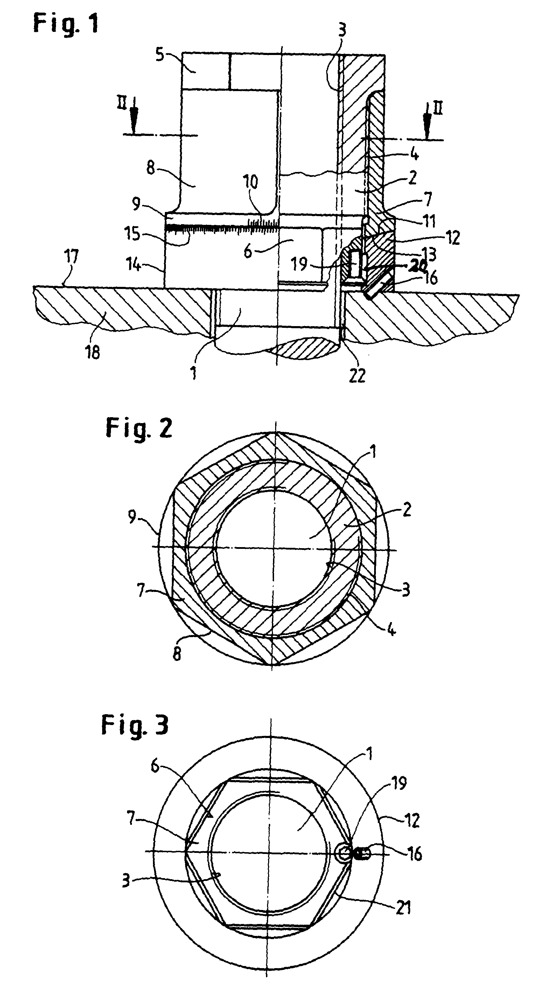

- Fig. 1: eine Seitenansicht der erfindungsgemäßen Meßeinrichtung teilweise im Schnitt,
- Fig. 2: eine Schnittansicht gemäß II - II in Fig. 1 und
- Fig. 3: eine Ansicht von unten der Meßeinrichtung.

Ein Gewindebolzen 1 durchgreift eine Bohrung 22 in einem Flansch 18 und soll so gespannt werden, daß er eine für den Einsatzzweck vorbestimmte Dehnung erreicht. Hierzu wird eine Spanneinrichtung aus einer Mutter 2 mit einem auf den Gewindebolzen 1 schraubbaren Innengewinde 3 und einem Außengewinde 4 auf den Gewindebolzen 1 geschraubt, nachdem zuvor auf das Außengewinde 4 der Mutter 2 ein Spannelement 7 in Form einer Außenmutter geschraubt wurde. An der Mutter 2 ist des weiteren eine Unterlegscheibe 12 mittels einer Halteschraube 19 gehalten, die mit einem Teil ihres Kopfs in einen Axialschlitz 20 in der Unterlegscheibe 12 ragt.

Die Mutter 2 wird so weit auf das Gewindeende des Gewindebolzens 1 geschraubt, daß die Unterlegscheibe 12 zur Anlage auf einer Auflagefläche 17 des Flansches gelangt und so weit mit geeigneten Mitteln angezogen, daß sämtliches Spiel in den Gewinden 3, 4 und den Berührungsflächen zwischen dem Spannelement 7, der Unterlegscheibe 12 und dem Flansch 18 beseitigt ist.

Die Mutter 2 weist im oberen Endbereich einen Außensechskant 5 und im unteren, der Unterlegscheibe 12 benachbarten Endbereich ebenfalls ein Außensechskant 6 auf. Dieser Außensechskant wirkt mit Spiel mit einem Innensechskant 21 an der Unterlegscheibe 12 zusammen, so daß sich die Mutter 2 nur zusammen mit der Unterlegscheibe 12 drehen kann bzw. von dieser Unterlegscheibe 12 an einer Drehung gehindert wird.

Das Spannelement 7 ist mit einem Außensechskant 8 und einem zur Unterlegscheibe 12 benachbarten zylindrischen Bereich 9 versehen. Auf diesem zylindrischen Bereich 9 ist eine Referenzmarkierung in Form eines Nonius 10 angebracht. Das Spannelement 7 liegt mit einer balligen Ringfläche 11 an einer komplementären Ringfläche 13 der Unterlegscheibe 12 an.

Die Unterlegscheibe 12 weist einen zylindrischen Außenumfang 14 auf, auf dem benachbart zum zylindrischen Bereich 9 des Spannelements 7 eine Dehnungsmeßskala 15 angeordnet ist. Diese Dehnungsmeßskala 15 erstreckt sich um den gesamten zylindrischen Außenumfang 14 der Unterlegscheibe 12 oder über einen Teilbereich, wenn dies zum Messen der geforderten Dehnung des Gewindebolzens 1 ausreicht. Die Teilung der Dehnungsmeßskala 15 ist in Millimetern oder Bruchteilen von Millimetern vorgesehen, so daß sich die Dehnung des Gewindebolzens 1 direkt in Millimetern und Bruchteilen von Millimetern unter Zuhilfenahme des Nonius 10 ablesen läßt.

In einer schrägen Gewindebohrung der Unterlegscheibe 12 ist eine Schraube 16 angeordnet, die sich, wenn die Unterlegscheibe 12 auf der Auflagefläche 17 aufliegt, gegen diese Auflagefläche 17 verspannen läßt und auf diese Weise eine Verdrehsicherung für die Unterlegscheibe 12 und über den Innensechskant 21 an der Unterlegscheibe 12 und den Außensechskant 6 an der Mutter 2 ebenfalls eine Verdrehsicherung für diese Mutter 2 bildet.

Anstelle der als Schraube ausgebildeten Verdrehsicherung kann die Unterlegscheibe 12 auch an ihrer Unterseite eine Rändelung oder eine Plankerbverzahnung aufweisen, die sich in die Auflagefläche 17 einpreßt und auf diese Weise eine Verdrehsicherung bildet.

Um die Mutter 2, das Spannelement 7 und die Unterlegscheibe 12 vor dem Aufschrauben auf den Gewindebolzen 1 zusammenzuhalten, ist eine Halteschraube 19 in die Unterseite der Mutter 2 geschraubt und ragt mit einem Teil des Kopfes in einen Axialschlitz 20 in der Unterlegscheibe 12.

Auf den Gewindebolzen 1 wird die geforderte Dehnung aufgebracht, indem das Spannelement 7 mittels einer geeigneten Spannvorrichtung gegenüber der Mutter 2 in Drehung versetzt wird. Dabei stützt sich die nicht gezeigte Spannvorrichtung über den Außensechskant 5 an der durch die Unterlegscheibe 12 an einer Drehung gehinderten Mutter 2 ab, so daß keinerlei zusätzliche Drehmomentabstützung der Spannvorrichtung erforderlich ist. Während des Spannvorgangs läßt sich ständig die erreichte Dehnung mittels der Dehnungsmeßskala 15 und der Referenzmarkierung 10 ablesen, bis der geforderte Endwert erreicht ist, ohne daß die Spannvorrichtung abgesetzt werden muß.

Die vorstehend beschriebene Meßeinrichtung ist besonders für die Verwendung von hochbelasteten Gewindebolzen einsetzbar, bei denen eine Torsions- und Biegebeanspruchung des Gewindebolzens beim Spannen nicht auftreten darf. Ist eine solche Torsionsbelastung beim Spannen zulässig, läßt sich auf eine Unterteilung in Mutter und als Außenmutter ausgebildetes Spannelement verzichten. Vielmehr kann sich eine normale Mutter mit Außensechskant, die auch als Hutmutter ausgebildet sein kann, auf eine Unterlegscheibe abstützen, wobei die Mutter benachbart zur Unterlegscheibe die Referenzmarkierung oder die Dehnungsmeßskala und die Unterlegscheibe die Dehnungsmeßskala oder die Referenzmarkierung tragen. Die Genauigkeit der Ablesung wird bei dieser Anordnung nicht beeinträchtigt, jedoch erfährt der Gewindebolzen, wie bereits dargelegt, aufgrund der Gewindereibung eine Torsionsbeanspruchung, die sich der Dehnungsbeanspruchung überlagert und nicht immer zulässig ist. Für das Anziehen von Schrauben gelten entsprechende Überlegungen.

## Patentansprüche

1. Meßeinrichtung für die Dehnung eines mittels einer Mutter (2) gespannten Gewindebolzens (1) oder einer Schraube mit einer Dehnungsmeßskala (15) am Umfang der Mutter (2) oder am Schraubenkopf und einer feststehenden Referenzmarkierung (10).

2. Meßeinrichtung für die Dehnung eines mittels einer Mutter (2) gespannten Gewindebolzens (1) oder einer Schraube mit einer Dehnungsmeßskala (15) an einer mit Bezug auf die **feststehende** Mutter (2) oder den **feststehenden** Schraubenkopf zur Dehnung des Gewindebolzens (1) oder der Schraube schraubbaren, sich an einer Auflagefläche (17) abstützenden **Außenmutter** (7) und einer bezüglich der Auflagefläche (17) feststehenden Referenzmarkierung (10).

3. Meßeinrichtung für die Dehnung eines mittels einer Mutter (2) gespannten Gewindebolzens (1) oder einer Schraube mit einer Dehnungsmeßskala (15) am Umfang einer feststehenden **Unterlegscheibe** (12) und mit einer Referenzmarkierung (10) an der Mutter (2) oder am Schraubenkopf.

4. Meßeinrichtung für die Dehnung eines mittels einer Mutter (2) gespannten Gewindebolzens (1) oder einer Schraube mit einer Dehnungsmeßskala (15) am Umfang einer **Unterlegscheibe** (12), die mit Bezug auf die Mutter (2) oder den Schraubenkopf feststeht und einer Referenzmarkierung (10) an einer mit Bezug auf die **feststehende Mutter** (2) oder den **feststehenden** Schraubenkopf zur Dehnung des Gewindebolzens (1) oder der Schraube schraubbaren **Außenmutter** (7).

5. Meßeinrichtung nach einem der Ansprüche 1 bis 4, **dadurch gekennzeichnet, daß** die Dehnungsmeßskala (15) eine Einteilung in Millimetern oder Bruchteilen davon aufweist.

6. Meßeinrichtung nach einem der Ansprüche 1 bis 5, **dadurch gekennzeichnet, daß** die Referenzmarkierung (10) als Nonius ausgebildet ist.

7. Meßeinrichtung nach Anspruch 2 oder 4, **dadurch gekennzeichnet, daß** die auf das Gewindeende eines Gewindebolzens (1) aufschraubbare Mutter (2) ein Außengewinde (4) für die gegen die Auflagefläche (17) schraubbare Außenmutter (7) aufweist und das Innengewinde (3) und das Außengewinde (4) der Mutter (2) unterschiedliche Steigungen aufweisen.

8. Meßeinrichtung nach Anspruch 7, **dadurch gekennzeichnet, daß** sich die Außenmutter (7) an der gegenüber der Auflagefläche (17) undrehbar festlegbaren Unterlegscheibe (12) abstützt.

9. Meßeinrichtung nach Anspruch 8, **dadurch gekennzeichnet, daß** sich die Außenmutter (7) mit einer balligen Ringfläche (11) an einer komplementär ausgebildeten Fläche (13) der Unterlegscheibe (12) abstützt.

10. Meßeinrichtung nach Anspruch 8 oder 9, **gekennzeichnet durch** eine Verdrehsicherung für die Unterlegscheibe (12) in Form einer gegen die Auflagefläche (17) spannbaren Schraube (16).

11. Meßeinrichtung nach Anspruch 8 oder 9, **gekennzeichnet durch** eine Verdrehsicherung für die Unterlegscheibe (12) in Form einer gegen die Auflagefläche (17) gerichteten Rändelung oder Plankerbverzahnung.

12. Meßeinrichtung nach einem oder mehreren der Ansprüche 8 bis 11 **gekennzeichnet durch** eine eine relative Axialverschiebung zulassende Verdrehsicherung (6, 21) zwischen der Mutter (2) und der Unterlegscheibe (12).

13. Meßeinrichtung nach Anspruch 12, **dadurch gekennzeichnet, daß** die Verdrehsicherung aus einem Außensechskant (6) am zur Unterlegscheibe (12) benachbarten Ende der Mutter (2) und einem diesen Außensechskant (6) mit Spiel umgreifenden Innensechskant (21) an der Unterlegscheibe (12) besteht.

14. Meßeinrichtung nach einem oder mehreren der Ansprüche 8 bis 13, **dadurch gekennzeichnet, daß** die Dehnungsmeßskala (15) auf einem zylindrischen Außenumfang (14) der Unterlegscheibe (12) und die Referenzmarkierung (10) auf einem hierzu benachbarten zylindrischen Bereich (9) des Spannelements (7) angeordnet sind

15. Meßeinrichtung nach einem oder mehreren der Ansprüche 2, 4 und 5 bis 14, **gekennzeichnet durch** einen Außensechskant (8) an der Außenmutter (7) und benachbart dazu einen Außensechskant (5) an der Mutter (2).

## Claims

1. Device for measuring the extension of a threaded bolt (1) which is tightened by means of a nut (2), or of a screw, having an extension scale (15) on the circumference of the nut (2) or on the screw head, and having a fixed reference mark (10).

2. Device for measuring the extension of a threaded bolt (1) which is tightened by means of a nut (2), or of a screw, having an extension scale (15) on an **outer nut** (7) which rests on a supporting surface (17) and which - for the purpose of extending the threaded bolt (1) or the screw - can be screwed in relation to the **fixed** nut (2) or the **fixed** screw head, and having a reference mark (10) which is fixed in relation to the supporting surface (17).

3. Device for measuring the extension of a threaded bolt (1) which is tightened by means of a nut (2), or of a screw, having an extension scale (15) on the edge of a fixed **support washer** (12), and having a reference mark (10) on the nut (2) or on the head of the bolt.

4. Device for measuring the extension of a threaded bolt (1) which is tightened by means of a nut (2), or of a screw, having an extension scale (15) on the edge of a **support washer** (12), which is fixed in relation to the nut (2) or the bolt head, and having a reference mark (10) on an **outer nut** (7) which - for the purpose of extending the threaded bolt (1) or the screw - can be screwed in relation to the **fixed nut** (2) or the fixed bolt head.

5. Measuring device as in one of Claims 1 to 4, **characterised in that** the extension scale (15) is divided into millimetres or fractions thereof.

6. Measuring device as in one of Claims 1 to 5, **characterised in that** the reference mark (10) is in the form of a vernier.

7. Measuring device as in Claim 2 or 4, **characterised in that** the nut (2), which can be screwed on to the thread end of a threaded bolt (1), has an external thread (4) for the outer nut (7) which can be screwed against the supporting surface (17), and that the internal thread (3) and external thread (4) of the nut (2) are of different pitch.

8. Measuring device as in Claim 7, **characterised in that** the outer nut (7) rests on the support washer (12), which can be secured in such a way that it does not turn in relation to the supporting surface (17).

9. Measuring device as in Claim 8, **characterised in that** the outer nut (7) has a crowned ring surface (11), and rests on a surface (13) of the support washer (12) which has a complementary shape.

10. Measuring device as in Claim 8 or 9, **characterised by** a turning lock for the support washer (12), in the form of a screw (16) which can be tensioned against the supporting surface (17).

11. Measuring device as in Claim 8 or 9, **characterised by** a turning lock for the support washer (12) in the form of knurling or crown gearing which is directed against the support surface (17).

12. Measuring device as in one or more of Claims 8 to 11, **characterised by** a turning lock (6, 21) which permits a relative axial displacement between the nut (2) and the support washer (12).

13. Measuring device as in Claim 12, **characterised in that** the turning lock consists of a hexagon insert (6) on the side of the nut (2) which is adjacent to the support washer (12), and a hexagon socket (21) on the support washer (12), which surrounds this hexagon insert (6) with some free play.

14. Measuring device as in one or more of Claims 8 to 13, **characterised in that** the extension scale (15) is located on a cylindrical outer circumference (14) of the support washer (12), and the reference mark (10) is located on an adjacent cylindrical area (9) of the clamping element (7).

15. Measuring device as in one or more or Claims 2, 4, and 5 to 14, **characterised by** a hexagon insert (8) on the outer nut (7) and - adjacent to this - a hexagon insert (5) on the nut (2).

## Revendications

1. Dispositif de mesure de l'allongement d'un boulon fileté (1) serré au moyen d'un écrou (2), ou d'une vis, comportant une échelle de mesure d'allongement (15) sur le pourtour de l'écrou (2), ou sur la tête de vis, ainsi qu'un marquage de référence (10) fixe.

2. Dispositif de mesure de l'allongement d'un boulon fileté (1) serré au moyen d'un écrou (2), ou d'une vis, comportant une échelle de mesure d'allongement (15) sur un écrou extérieur (7) qui peut être vissé par rapport à l'écrou fixe (2) ou par rapport à la tête de vis fixe pour l'allongement du boulon fileté (1) ou de la vis, et qui prend appui contre une surface d'appui (17), fixe par rapport au marquage de référence (10).

3. Dispositif de mesure de l'allongement d'un boulon fileté (1) serré au moyen d'un écrou (2), ou d'une vis, comportant une échelle de mesure d'allongement (15) sur le pourtour d'une rondelle fixe (12) ainsi qu'un marquage de référence (10) sur l'écrou (2) ou sur la tête de vis.

4. Dispositif de mesure de l'allongement d'un boulon fileté (1) serré au moyen d'un écrou (2), ou d'une vis, comportant une échelle de mesure d'allongement (15) sur le pourtour d'une rondelle (12), qui est fixe par rapport à l'écrou (2) ou tête de vis, ainsi qu'un marquage de référence (10) sur un écrou extérieur (7) qui peut être vissé par rapport à un écrou fixe (2) ou par rapport à la tête de vis fixe pour l'allongement du boulon fileté (1) ou de la vis.

5. Dispositif de mesure selon les revendications 1 à 4, **caractérisé en ce que** l'échelle de mesure d'allongement (15) présente une subdivision en millimètres ou en fractions de millimètre.

6. Dispositif de mesure selon l'une des revendications 1 à 5, **caractérisé en ce que** le marquage de référence (10) est réalisé en tant que vernier.

7. Dispositif de mesure selon la revendication 2 ou 4, **caractérisé en ce que** l'écrou (2), qui peut être vissé sur l'extrémité filetée d'un boulon fileté (1), comporte un filetage extérieur (4) pour l'écrou extérieur (7) à visser contre la surface d'appui (17), et le taraudage (3) et le filetage extérieur (4) de l'écrou (2) présentent des pas différents.

8. Dispositif de mesure selon la revendication 7, **caractérisé en ce que** l'écrou extérieur (7) prend appui contre la rondelle (12) qui peut être fixée de manière à ne pouvoir tourner par rapport à la surface d'appui (17).

9. Dispositif de mesure selon la revendication 8, **caractérisé en ce que** l'écrou extérieur (7) prend appui, par une surface annulaire (11) bombée, contre une surface (13) complémentaire de la rondelle (12).

10. Dispositif de mesure selon la revendication 8 ou 9, **caractérisé par** un blocage en rotation pour la rondelle (12), sous la forme d'une vis (16) qui peut être serrée contre la surface d'appui (17).

11. Dispositif de mesure selon la revendication 8 ou 9, **caractérisé par** un blocage en rotation pour la rondelle (12), sous la forme d'un moletage dirigé vers la surface d'appui (17), ou d'une denture plate.

12. Dispositif de mesure selon une ou plusieurs des revendications 8 à 11, **caractérisé par** un blocage en rotation (6, 21) entre l'écrou (2) et la rondelle (12), qui autorise un coulissement axial relatif.

13. Dispositif de mesure selon la revendication 12, **caractérisé en ce que** le blocage en rotation est constitué d'une hexagone mâle (6) à l'extrémité de l'écrou (2), voisine de la rondelle (12), ainsi que de six pans creux (21) sur la rondelle (12) qui entourent cet hexagone mâle (6) avec jeu.

14. Dispositif de mesure selon une ou plusieurs des revendications 8 à 13, **caractérisé en ce que** l'échelle de mesure d'allongement (15) est disposée sur un périmètre extérieur cylindrique (14) de la rondelle (12), et le marquage de référence (10) est disposé sur une zone cylindrique (9) de l'élément de serrage (7), voisine de l'échelle de mesure d'allongement.

15. Dispositif de mesure selon une ou plusieurs des revendications 2, 4 et 5 à 14, **caractérisé par** un hexagone mâle (8) sur l'écrou extérieur (7) et, au voisinage de celui-ci, par un hexagone mâle (6) sur l'écrou (2).
